# EUROPEAN PATENT SPECIFICATION

(11) **EP 1 043 053 B1**
(45) Date of publication and mention of the grant of the patent: **19.07.2006**
(21) Application number: 99870065.2
(22) Date of filing: 06.04.1999
(51) Int. Cl.: B01D 29/66, B01D 65/08, B01D 29/11, B01D 65/02

(54) **Cleaning device for membranes**
Reinigungsvorrichtung für Membranen
Dispositif de nettoyage pour membranes

(43) Date of publication of application: 11.10.2000
(73) Proprietor: "VLAAMSE INSTELLING VOOR TECHNOLOGISCH ONDERZOEK", afgekort "V.I.T.O.", 2400 Mol (BE)
(72) Inventor: Van Hoof, Erwin, 2470 Retie (BE); Molenberghs, Bart, 2400 Mol (BE); Doyen, Willy, 2160 Wommelgem (BE); Brauns, Etienne, 2400 Mol (BE)
(74) Representative: Van Malderen, Joëlle

(56) References cited:
- DE-A- 4 307 723
- FR-A- 2 707 520
- US-A- 4 271 019
- US-A- 5 234 605
- US-A- 5 512 167
- US-A- 5 846 420

## Description

### Field of the invention

The present invention concerns a method to clean membranes in cross flow filtration systems and a device for doing same.

### State of the art

Cross flow is a conventional filtration method to clean fluids. The principle of cross-flow is described in detail by M. Mulder: Basic Principles of Membrane Technology, published by Kluwer Academic Publishers, 3996 (ISBN 0-7923-4248-S) pp 475-478. In a cross-flow filtration system the feed flows parallel to the membrane surface while the fluid penetrates the membrane pores in a direction perpendicular to the membrane surface. Contaminants that are unable to penetrate the membrane pores will be carried further by the feed or will be retained to some extent on the membrane surface. The feed therefore is separated in two parts: one part with an increasing content of contaminants being called the retentate and one part that results from the filtration effect of the membrane being called the permeate.

As a result of the filtration effect of the membrane a layer of contaminants is formed on the surface of the membrane. This layer will act as an additional barrier causing an unwanted decline in the permeate flux through the membrane. Concentration polarisation effects may also occur in those filtration systems where concentration gradients are induced from solutions, resulting in backward diffusion effects that considerably can influence the permeate flux in a negative way. To counter such effects the feed flow (tangential velocity) can be increased to sweep away a larger amount of contaminants or to diminish gradients, thus reducing the barrier resistance. Of course this increase in feed flow consumes additional energy and eventually requires more powerful pumps in a way a balance has to be made with respect to the beneficial effect in the increase of permeate flux versus the negative effect from the increase in the consumed energy and pump investments.

The method of increase in feed flow can be successful but in a number of cases the permeate flux remains too low. Another technique can be introduced to remove the layer on the membrane surface. This technique is based on a temporary reversed permeate flow through the membrane surface, flushing away the retained layer on that surface and is described as backpulse (or backflush or backshock). During this flushing effect a distinct amount of permeate is forced backwards through the membrane surface by a reversed pressure drop across the membrane. From the cleaning action of the backpulse the original permeate flux from the "clean" membrane surface is restored. After the backpulse action however the flux gradually declines again as a result of the rebuilding of the layer. The backpulse therefore is applied intermittently, producing a saw-tooth type of permeate flux behaviour in time. As a result, the mean permeate flux value over a long period of time is much higher when applying the simple backpulse method.

Traditional backpulse designs involve a piston system, build within the permeate piping, including specific valves incorporated within the filtration system. At least one valve is necessary to close the permeate outlet during the backpulse, enabling a reversed pressure build-up across the membrane. In these configurations however the practical speed of closing the valves is limited and also the timing of closure with the piston action must be perfect. Non-ideal backpulse functionality may result from these factors, with an overall smaller permeate yield in time.

In classic backpulse devices the volume within the device is usually a "dead volume" during non-backpulse activity, possibly creating regions of contamination (e.g. bacteria or particle build-up).

In US patent 5,512,167 the design of a new device is described whcse piston and valve action are combined in one assembly.

The piston is advanced by means of pressure, while the return of the piston is ensured by the system pressure (permeate pressure). A minimum permeate pressure is thus needed for normal operation of the backpulse system. The movement of the piston is always the same, spending too much permeate in a number of cases, resulting in a decreased efficiency of the filtration apparatus. This design, however, shows some inconveniences and flaws. The permeate outlet consists of a single hole and the seals of the piston-and-cylinder assembly will slide along said signal hole every time a backpulse is performed, and this will result in fast degradation of the seals.

### Aims of the invention

A first aim of the present invention is to provide a new backpulse device for a cross flow filtration system that does not introduce a large dead volume in the system.

A further aim of the present invention is to provide a backpulse device that works independently from the permeate pressure.

Another aim of the present invention is to provide a backpulse device that does not wear quickly and needs low maintenance.

### Summary of the invention

The present invention concerns a backpulse device for a crossflow filtration system comprising a permeate chamber, a permeate inlet, a permeate outlet, a piston having a first position and a second position and being capable of movement between said first position and said second position, said first position being such that said piston is not placed between said permeate inlet and said permeate outlet and that it permits fluid flow between said permeate inlet and said permeate outlet, said second position being such that said piston is placed between said permeate inlet and said permeate outlet and that it substantially blocks fluid flow between said permeate inlet and said permeate outlet, characterised in that between said permeate outlet and said piston there is a cylinder comprising several holes, preferably evenly distributed over the cylinder surface and said holes connecting said permeate chamber and said permeate outlet. The backpulse device can be further characterised in that said piston is actuated to move to a position between the first position and the second position by a pneumatic device, said pneumatic device being able to exert a force exceeding the permeate pressure that is present in the permeate chamber.

In a first specific embodiment of the present invention, said backpulse device is characterised in that the piston is not in direct or indirect contact with the cylinder. Preferably, the tolerance between the piston surface and the cylinder surface lies between 0.01 and 0.2 mm.

In a second specific embodiment of the present invention, said backpulse device is characterised in that the piston and the cylinder are assembled to each other. Preferably, the assembled piston and cylinder are not in direct or indirect contact with the permeate chamber. Advantageously, the tolerance between the surface of the assembled piston and cylinder and the surface of the permeate chamber lies between 0.01 and 0.2 mm.

The backpulse device of the present invention can be further characterised in that the movement of the piston from the second position to the first position is actuated by the same device as the movement from the first position to the second position.

Preferably, the backpulse device of the present invention further comprises a control unit, said control unit controlling the movement of the piston.

Another aspect of the present invention concerns a cross flow filtration system comprising the backpulse device as described higher.

The present invention also concerns a method for cleaning a filtration membrane of a cross flow filtration system, said cross flow filtration system comprising a backpulse device such as described higher, characterised in that the following steps are cyclically repeated:
- the piston is moved from the first position towards the second position until the fluid pressure in the permeate chamber is at a preset value,
- the piston is moved back to the first position, and
- the backpulse device pauses until the next cycle is due.

The movement of the piston is preferably actuated by a pneumatic device.

In an advantageous embodiment of the present invention, the transmembrane pressure during the movement of the piston to the first position remains lower than or equal to the transmembrane pressure during normal filtration, as to avoid a suction effect resulting in refouling of the membrane surface.

### Short description of the figures

Figure 1 describes the backpulse device according to the present invention.
Figure 2 shows a graph of the cross-flow filtration according to the method of the invention of the cooling fluid of a grinding machine.
Figure 3 depicts the results of a filtration of a catalyst dispersion using the method of the invention.
Figure 4 is a graph that describes the pressure profile of a short backpulse with good adjusted bleed valves.
Figure 5 is a graph describing the effect of a fast retraction of the piston with a sub-pressure at the permeate side.

### Detailed description of the invention

The invention will be further clarified using non-limiting examples and figures.

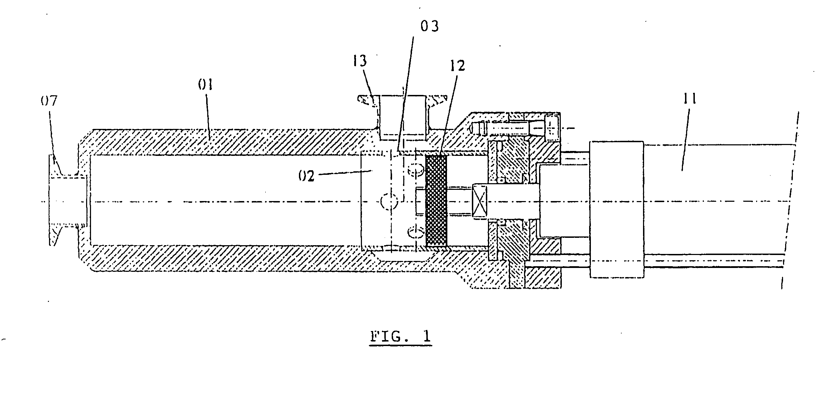

As shown in figure 1 the backpulse assembly includes a cylindrical permeate chamber 01 incorporating a backpulse piston 12 driven (e.g. pneumatically) by cylinder 11. During the retracted position of the backpulse piston 12, the permeate is entering the backpulse device at flange 07 and leaving the device through the holes 03 in cylinder 02 at flange 13. When actuated, the backpulse-piston 12 is moving through cylinder 02 thereby gradually closing the holes 03 and blocking the permeate to flow further out of the device at flange 13. From the moment the holes are completely blocked, the backpulse cylinder 11 is able to build up pressure and redirect a specific amount of permeate out of the device at flange 07, backwards to the membrane. The reversed flow of permeate through the membrane during the backpulse action therefore will clear the membrane surface from the layer, being build up during filtration. In this way the device is able to perform both functions of a backpulse cylinder and a valve, avoiding an expensive separate valve construction and corresponding timing systems to close and open the valve(s). A typical cycle-time of the new design is less than 300 milliseconds resulting in a minimal disruption of the filtration process.

Another advantage is the flow of the permeate through the backpulse device, having a cleaning effect on it, contrary to the classic backpulse devices with a "dead volume" open for contamination (e.g. bacteria or particle build-up).

The chamber 02 with multiple holes 03 at the circumference, provides a much smoother guidance to the piston when compared to a device with only one hole. The use of only one hole as an outlet port increases substantially the risk of damage to the piston 12. Another improvement to the durability of the piston is a gap of 0.1 to 0.2 mm between the piston 12 and the chamber 02. Because of the speed of the piston during the backpulse the loss of permeate through the gap is negligible. This means that the piston 12 does not need any sealing.

In an alternative design the backpulse piston 12 and cylinder 02 are combined in one piece in a way cylinder 02 and piston 12 are moving as one part within permeate chamber 01.

In that case, a closing valve action is obtained the moment that cylinder 02 penetrates permeate chamber 01, and the holes within 02 are sealed by permeate chamber 01.

### Example 1: filtration of cooling fluids as used in grinding machines

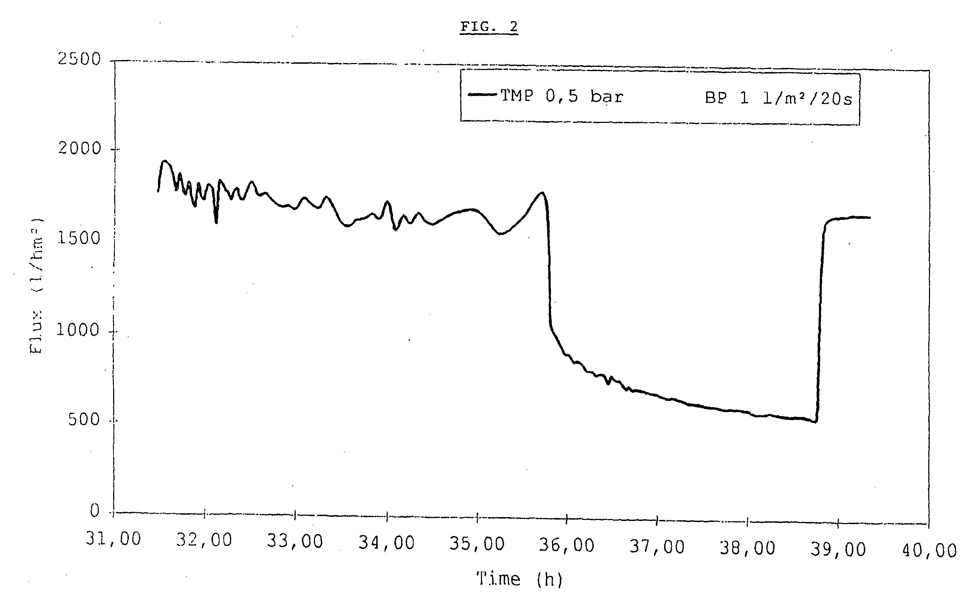

Diamond grinding machines are used to shape components from technical ceramics. During grinding the surfaces of the grinding tools and the component are cooled by a fluid, consisting of a 2 % aqueous solution of a cooling agent. Material being removed from the ceramic component during grinding is powdery and is dispersed in the cooling fluid. These contaminants are unwanted in the cooling fluid since they will negatively influence the surface quality of the component being ground and will lead to an accelerated wear of tools and machine parts. Traditional filtration when applying centrifugal or dead-end (candle) filters is not adequate. Cross-flow filtration gives an excellent permeate quality and therefore produces a clean cooling fluid. Backpulses however are necessary to ensure a sufficient permeate flux. Figure 2 shows the effect of backpulses on the permeate flux of such a cooling fluid. A high permeate flux up to about 1700 l/h.m² is obtained with backpulses. To illustrate the backpulse effect the backpulse was stopped at 35.8 h leading to a decline of the permeate flux from about 1700 l/h.m² to 600 l/h.m². By restoring the backpulse regime 3 hours later the membrane was cleaned and the permeate flux regains the value of about 1700 l/h.m².

### Example 2: removing a catalyst from a chemical reactor.

From a chemical reactor a dispersion of a catalyst powder could be successfully treated with a cross-flow microfiltration system, to be able to recycle the catalyst from the fluid. The permeate flux decline without backpulse was unacceptable.

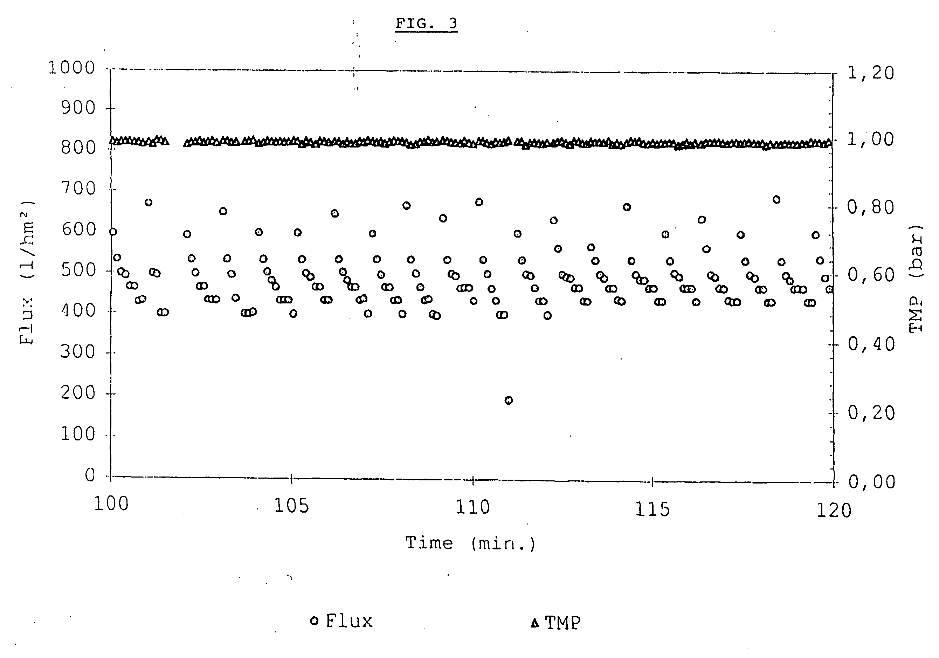

Figure 3 shows the result of the filtration of the catalyst powder. The permeate flux declines to a value of 700 l/h.m². Without backpulse the permeate flux further declines within a minute to a value of less than 400 l/h.m² and declining further afterward. With backpulses the flux could be restored to 700 l/h.m², also avoiding the contaminants to adhere irreversibly to the membrane surface. From the short duration of the backpulse from the device the global filtration process was not disturbed. Irrespective of the backpulse frequency of one pulse per minute, the transmembrane pressure (TMP) of 1 bar showed no important variations. With classical systems with longer backpulse timings, pressure variations can not be avoided.

### Example 3: Control of the retraction of the piston

When a low TMP gives optimal results, the retraction of the piston is preferably not activated by the permeate pressure (under filtration conditions) anymore, since the TMP that has to be applied to return the piston to the initial position will be too high. Some filtrations using cross flow microfiltration and backpulse cleaning are optimised at a TMP less than 0.5 bars. With such low TMP values the permeate pressure is inadequate for the retraction movement of the piston. For this reason the device according to the present invention can have a separate pneumatic cylinder so that both forward and backward piston movements can be completely controlled by air pressure and bleed valves.

### Example 4: Control of the backpulse action

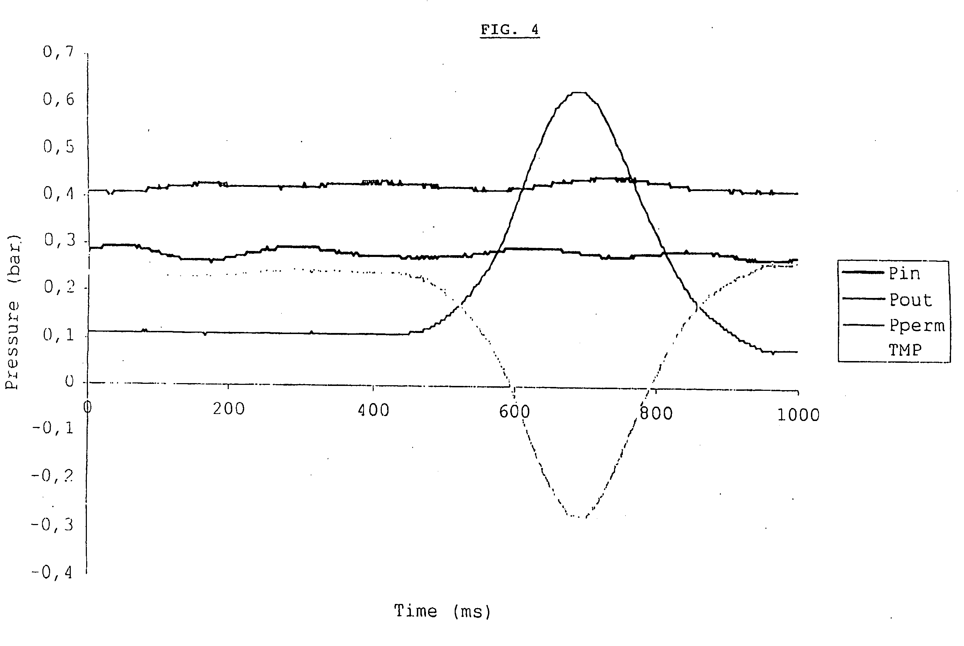

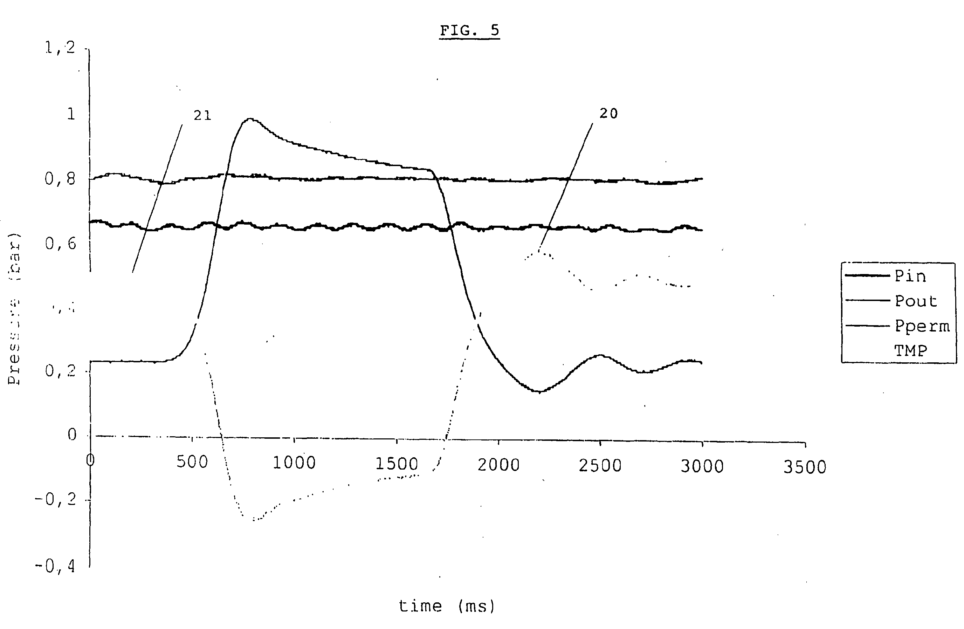

The backpulse control is performed by a timer and two bleed valves. The timer determines the time of pulsing while the bleed valves are controlling the pressure. The speed of the retraction of the piston has to be limited to avoid a sub-pressure at the permeate side. A short backpulse with good adjusted bleed valves is shown in fig. 4. A fast retraction of the piston with a sub-pressure at the permeate side could have the effect of the particles to be retransported back to the membrane. This effect is shown in fig. 5. The TMP during the return of the piston (20) is higher than the TMP during filtration (21). In this case also the time of the backpulse has been increased.

## Claims

1. A backpulse device for a crossflow filtration system comprising a permeate chamber (01), a permeate inlet (07), a permeate outlet (13), a piston (12) having a first position and a second position and being capable of movement between said first position and said second position, said first position being such that said piston is not placed between said permeate inlet and said permeate outlet and that it permits fluid flow between said permeate inlet and said permeate outlet, said second position being such that said piston is placed between said permeate inlet and said permeate outlet and that it substantially blocks fluid flow between said permeate inlet and said permeate outlet, **characterised in that** between said permeate outlet and said piston there is a cylinder (02) comprising several holes (03), evenly distributed over the cylinder surface and said holes connecting said permeate chamber and said permeate outlet.

2. Backpulse device such as in claim 1, **characterised in that** said piston is actuated to move to a position between the first position and the second position by a pneumatic device, said pneumatic device being able to exert a force exceeding the permeate pressure that is present in the permeate chamber (01).

3. Backpulse device such as in claim 1 or 2, **characterised in that** the piston (12) is not in direct or indirect contact with the cylinder (02).

4. Backpulse device such as in claim 3, **characterised in that** the tolerance between the surface of the piston (12) and the surface of the cylinder (02) lies between 0.01 and 0.2 mm.

5. Backpulse device such as in claim 1 or 2, **characterised in that** the piston (12) and the cylinder (2) are assembled to each other.

6. Backpulse device such as in claim 5, **characterised in that** the assembled piston (12) and cylinder (02) are not in direct or indirect contact with the permeate chamber (01).

7. Backpulse device such as in claim 6, **characterised in that** the tolerance between the surface of the assembled piston (12) and cylinder (02) and the surface of the permeate chamber lies between 0.01 and 0.2 mm.

8. Backpulse device such as in any of the claims 1 to 7, **characterised in that** the movement of the piston from the second position to the first position is actuated by the same device as the movement from the first position to the second position.

9. Backpulse device such as in any of the claims 1 to 8, **characterised in that** said device further comprises a control unit, said control unit controlling the movement of the piston (12).

10. A crossflow filtration system comprising the backpulse device as in any of the claims 1 to 9.

11. A method for cleaning a filtration membrane of a cross flow filtration system, said cross flow filtration system comprising a backpulse device such as described in any of the claims 1 to 9, **characterised in that** the following steps are cyclically repeated:
• the piston (12) is moved from the first position towards the second position until the fluid pressure in the permeate chamber (01) is at a preset value, and
• the piston (12) is moved back to the first position
• the backpulse device pauses until the next cycle is due.

12. The method as in claim 11, **characterised in that** the movement of the piston (12) is actuated by a pneumatic device.

13. The method as in claim 11 or 12, **characterised in that** during the movement of the piston (12) to the first position, the transmembrane pressure remains lower than or equal to the transmembrane pressure during normal filtration, as to avoid a suction effect resulting in refouling of the membrane surface.

## Patentansprüche

1. Rückimpulsvorrichtung für eine Querstrom-Filtrationsanlage, umfassend eine Permeatkammer (01), einen Permeateinlass (07), einen Permeatauslass (13), einen Kolben (12), der eine erste Position und eine zweite Position aufweist und in der Lage ist, eine Bewegung zwischen der ersten Position und der zweiten Position auszuführen, wobei die erste Position so beschaffen ist, dass sich der Kolben nicht zwischen dem Permeateinlass und dem Permeatauslass befindet und dass er einen Fluidstrom zwischen dem Permeateinlass und dem Permeatauslass ermöglicht, wobei die zweite Position so beschaffen ist, dass sich der Kolben zwischen dem Permeateinlass und dem Permeatauslass befindet und dass er den Fluidstrom zwischen dem Permeateinlass und dem Permeatauslass im Wesentlichen blockiert, **dadurch gekennzeichnet, dass** zwischen dem Permeatauslass und dem Kolben ein Zylinder (02) vorhanden ist, der mehrere Öffnungen (03) umfasst, die gleichmäßig über die Zylinderoberfläche verteilt sind, und wobei die Öffnungen die Permeatkammer und den Permeatauslass verbinden.

2. Rückimpulsvorrichtung nach Anspruch 1, **dadurch gekennzeichnet, dass** der Kolben von einer pneumatischen Vorrichtung so angetrieben wird, dass er sich in eine Position zwischen der ersten Position und der zweiten Position bewegt, wobei die pneumatische Vorrichtung in der Lage ist, eine Kraft auszuüben, die den Permeatdruck übersteigt, welcher in der Permeatkammer (01) vorhanden ist.

3. Rückimpulsvorrichtung nach Anspruch 1 oder 2, **dadurch gekennzeichnet, dass** sich der Kolben (12) nicht in direktem oder indirektem Kontakt mit dem Zylinder (02) befindet.

4. Rückimpulsvorrichtung nach Anspruch 3, **dadurch gekennzeichnet, dass** die Toleranz zwischen der Oberfläche des Kolbens (12) und der Oberfläche des Zylinders (02) zwischen 0,01 und 0,2 mm beträgt.

5. Rückimpulsvorrichtung nach Anspruch 1 oder 2, **dadurch gekennzeichnet, dass** der Kolben (12) und der Zylinder (02) zusammengebaut sind.

6. Rückimpulsvorrichtung nach Anspruch 5, **dadurch gekennzeichnet, dass** sich die aus Kolben (12) und Zylinder (02) bestehende Baugruppe nicht in direktem oder indirektem Kontakt mit der Permeatkammer (01) befindet.

7. Rückimpulsvorrichtung nach Anspruch 6, **dadurch gekennzeichnet, dass** die Toleranz zwischen der Oberfläche der aus Kolben (12) und Zylinder (02) bestehenden Baugruppe und der Oberfläche der Permeatkammer zwischen 0,01 und 0,2 mm beträgt.

8. Rückimpulsvorrichtung nach irgendeinem der Ansprüche 1 bis 7, **dadurch gekennzeichnet, dass** die Bewegung des Kolbens von der zweiten Position zur ersten Position durch dieselbe Vorrichtung angetrieben wird, wie die Bewegung von der ersten Position zur zweiten Position.

9. Rückimpulsvorrichtung nach irgendeinem der Ansprüche 1 bis 8, **dadurch gekennzeichnet, dass** die Vorrichtung ferner eine Steuereinheit umfasst, wobei die Steuereinheit die Bewegung des Kolbens (12) steuert.

10. Querstrom-Filtrationsanlage, welche die Rückimpulsvorrichtung nach irgendeinem der Ansprüche 1 bis 9 umfasst.

11. Verfahren zum Reinigen einer Filtrationsmembran einer Querstrom-Filtrationsanlage, wobei die Querstrom-Filtrationsanlage eine Rückimpulsvorrichtung wie in irgendeinem der Ansprüche 1 bis 9 beschrieben umfasst, **dadurch gekennzeichnet, dass** die folgenden Schritte zyklisch wiederholt werden:
• Der Kolben (12) wird aus der ersten Position in Richtung der zweiten Position bewegt, bis der Fluiddruck in der Permeatkammer (01) einen vorgegebenen Wert hat,
• der Kolben (12) wird zur ersten Position zurückbewegt, und
• die Rückimpulsvorrichtung unterbricht ihren Betrieb, bis der nächste Zyklus fällig ist.

12. Verfahren nach Anspruch 11, **dadurch gekennzeichnet, dass** die Bewegung des Kolbens (12) von einer pneumatischen Vorrichtung angetrieben wird.

13. Verfahren nach Anspruch 11 oder 12, **dadurch gekennzeichnet, dass** während der Bewegung des Kolbens (12) zur ersten Position der Transmembrandruck niedriger als der oder gleich dem Transmembrandruck während der normalen Filtration bleibt, so dass eine Saugwirkung vermieden wird, die zu erneuten Ablagerungen der Membranoberfläche führt.

## Revendications

1. Dispositif de contre-pression pour un système de filtration à écoulements croisés comprenant une chambre de perméat (01), une entrée de perméat (07), une sortie de perméat (13), un piston (12) ayant une première position et une seconde position et étant capable de se déplacer entre ladite première position et ladite seconde position, ladite première position étant telle que ledit piston n'est pas placé entre ladite entrée de perméat et ladite sortie de perméat et qu'il permet un écoulement de fluide entre ladite entrée de perméat et ladite sortie de perméat, ladite seconde position étant telle que ledit piston est placé entre ladite entrée de perméat et ladite sortie de perméat et qu'il bloque sensiblement l'écoulement de fluide entre ladite entrée de perméat et ladite sortie de perméat, **caractérisé en ce qu'**il y a, entre ladite sortie de perméat et ledit piston, un cylindre (02) comprenant plusieurs trous (03) distribués de manière égale sur la surface du cylindre et lesdits trous raccordant ladite chambre de perméat et ladite sortie de perméat.

2. Dispositif de contre-pression selon la revendication 1, **caractérisé en ce que** ledit piston est actionné pour se déplacer dans une position entre la première position et la seconde position par un dispositif pneumatique, ledit dispositif pneumatique étant capable d'exercer une force dépassant la pression de perméat qui est présente dans la chambre de perméat (01).

3. Dispositif de contre-pression selon la revendication 1 ou 2, **caractérisé en ce que** le piston (12) n'est pas en contact direct ou indirect avec le cylindre (02).

4. Dispositif de contre-pression selon la revendication 3, **caractérisé en ce que** la tolérance entre la surface du piston (12) et la surface du cylindre (02) se situe entre 0,01 et 0,2 mm.

5. Dispositif de contre-pression selon la revendication 1 ou 2, **caractérisé en ce que** le piston (12) et le cylindre (2) sont assemblés l'un avec l'autre.

6. Dispositif de contre-pression selon la revendication 5, **caractérisé en ce que** le piston (12) et le cylindre (02) assemblés ne sont pas en contact direct ou indirect avec la chambre de perméat (01).

7. Dispositif de contre-pression selon la revendication 6, **caractérisé en ce que** la tolérance entre la surface du piston (12) et du cylindre (02) assemblés et la surface de la chambre du perméat se situe entre 0,01 et 0,2 mm.

8. Dispositif de contre-pression selon l'une quelconque des revendications 1 à 7, **caractérisé en ce que** le mouvement du piston de la seconde position à la première position est actionné par le même dispositif que le mouvement de la première position à la seconde position.

9. Dispositif de contre-pression selon l'une quelconque des revendications 1 à 8, **caractérisé en ce que** ledit dispositif comprend en outre une unité de commande, ladite unité de commande commandant le mouvement du piston (12).

10. Système de filtration à écoulements croisés comprenant le dispositif de contre-pression selon l'une quelconque des revendications 1 à 9.

11. Procédé pour nettoyer une membrane de filtration d'un système de filtration à écoulements croisés, ledit système de filtration à écoulements croisés comprenant un dispositif de contre-pression tel que décrit dans l'une quelconque des revendications 1 à 9, **caractérisé en ce que** les étapes suivantes sont répétées de manière cyclique :
• le piston (12) est déplacé de la première position à la seconde position jusqu'à ce que la pression du fluide dans la chambre de perméat (01) soit à une valeur préétablie,
• le piston (12) est redéplacé vers la première position, et
• le dispositif de contre-pression s'arrête jusqu'au cycle suivant.

12. Procédé selon la revendication 11, **caractérisé en ce que** le mouvement du piston (12) est actionné par un dispositif pneumatique.

13. Procédé selon la revendication 11 ou 12, **caractérisé en ce qu'**au cours du mouvement du piston (12) vers la première position, la pression transmembranaire reste inférieure ou égale à la pression transmembranaire au cours d'une filtration normale, de manière à empêcher un effet d'aspiration entraînant un nouvel encrassement de la surface de la membrane.
